# EUROPEAN PATENT SPECIFICATION

(11) **EP 0 941 915 B1**
(45) Date of publication and mention of the grant of the patent: **12.05.2004**
(21) Application number: 99200390.5
(22) Date of filing: 11.02.1999
(51) Int. Cl.: B62D 61/12, B60G 11/46, B60G 17/005

(54) **Wheel axle suspension for a vehicle with a gas spring system**
Radachsenaufhängung für ein Fahrzeug mit pneumatischem Federungssystem
Suspension d'essieu d'une roue pour un véhicule à système de ressort pneumatique

(30) Priority: 09.03.1998 NL 1008538
(43) Date of publication of application: 15.09.1999
(73) Proprietor: Weweler Nederland B.V., 7332 AP Apeldoorn (NL)
(72) Inventor: Aalderink, Derk Geert, 7245 NV Laren (NL); Bramer, Hans, 6961 WR Eerbeek (NL)
(74) Representative: Iemenschot, Johannes Andreas, Ir.

(56) References cited:
- EP-A- 0 376 834
- EP-A- 0 431 673
- EP-A- 0 450 942
- EP-A- 0 670 258
- EP-A- 0 742 113
- US-A- 3 201 141
- US-A- 5 655 788

## Description

The present invention relates to a wheel axle suspension for a vehicle according to the preamble of claim 1.

A wheel axle suspension of this type is known from US-A-5655788. The known wheel axle suspension the axle lifting device comprises a cradle which depends from the carrying bracket. The carrying bracket has a first pair of laterally projecting spigots through which a pivot bolt for securing a damper to the bracket passes and a second pair of laterally projecting spigots through which a pivot bolt for securing the bearing arm to the bracket passes. The cradle comprises a pair of arms and a base member. Each arm has an upper portion through which there is a circular aperture. In one embodiment the first spigots each extends through the aperture of a respective arm, the arms being secured by the pivot bolt and a cooperating nut for securing a damper to the bracket. In a second embodiment the second spigots each extends through the aperture of a respective arm of a cradle, the arms being secured by the pivot bolt of the bearing arm. For mounting and removing the cradle on or from the carrying bracket the pivot bolt of the damper or of the bearing arm must be removed which is laborious and time-consuming. Moreover, the pivot bolt for the bearing arm must be fitted with a predetermined tightening moment. Special facilities are necessary for ensuring this tightening moment.

The object of the invention is to provide an improved wheel axle suspension with an axle lifting device wherein the axle lifting device is designed so as to be fitted subsequently to an existing wheel axle suspension in a simple manner.

This object is achieved by a wheel axle suspension according to claim 1.

By means of this construction it is possible in a simple manner to fit an axle lifting device subsequently on existing vehicles without having to weld or drill , or without laborious removal and fitting work having to be carried out.

Practical and advantageous embodiments of the axle lifting device according to the invention are claimed in the subclaims.

The invention will be explained in the description which follows of a number of possible embodiments of an axle lifting device with reference to the drawing, in which:
Fig. 1 is a diagrammatic representation of a wheel axle suspension of a vehicle with gas spring system and a first possible embodiment of the axle lifting device according to the invention;
Fig. 2 is a view of the axle lifting device shown in Fig. 1, viewed in the direction of the arrow II in Fig. 1;
Figs. 3 and 4 show a variant of a part of the axle lifting device shown in Fig. 1, in views corresponding to Fig. 1 and Fig. 2;
Figs. 5 to 10 show a number of other possible embodiments of the axle lifting device according to the invention;
Fig. 11 shows another variant of the axle lifting device shown in Fig. 1.

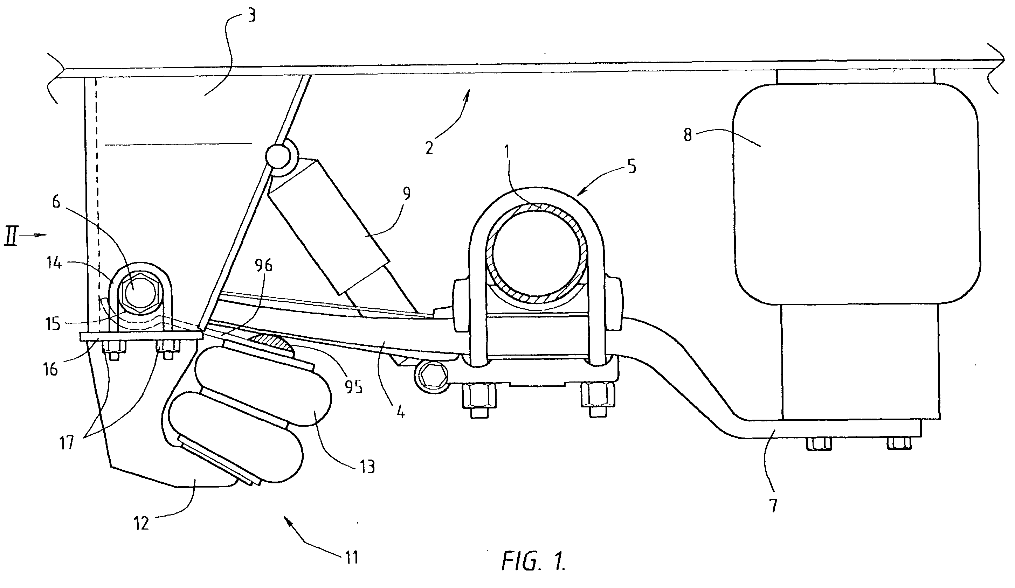

Fig. 1 shows a wheel axle suspension of a vehicle. The wheel axle is indicated by the reference numeral 1. The wheel axle 1, on which one or more wheels are fitted at both ends, is shown as a hollow round axle. However, the wheel axle 1 can also be square or have another cross-section. The vehicle is usually provided with a wheel axle suspension on both sides.

The wheel axle suspension comprises a carrying bracket 3 fixed to the chassis 2 of the vehicle and a bearing arm 4 for the wheel axle 1, which bearing arm is hingedly fixed to the carrying bracket 3 and extends in the longitudinal direction of the vehicle. The wheel axle 1 is immovably fixed in a known manner on the bearing arm 4 by means of a U-shaped clamp 5.

The bearing arm 4 is hingedly fixed to the carrying bracket 2 by means of a fixing bolt 6 extending in the transverse direction through the carrying bracket 2. Between the fixing bolt 6 and the wheel axle 1 the bearing arm 4 is generally in the form of a leaf spring which changes parabolically in thickness. In the embodiment shown, the bearing arm 4 extends with an end part 7 beyond the wheel axle 1. A gas spring 8 is fitted between said end part 7 and the chassis 2. In addition, a shock absorber 9 is fitted between the bearing arm 4 and the carrying bracket 3.

The wheel axle suspension further comprises an axle lifting device indicated in general by 11. The axle lifting device 11 comprises a support 12 which is fixed to the carrying bracket 3 and gas bellows 13 or another pneumatic expansion element fitted between the support 12 and the bearing arm 4.

In the case of the embodiment shown in Fig. 1, the support 12 is fixed to the carrying bracket 3. However, it is also possible to fix a support for the gas bellows 13 of an axle lifting device to the chassis 2, as will yet be described below.

According to the invention, the support 12 is detachably connected to the carrying bracket 3 or the chassis 2 by means of hook means which, on the one hand, are connected to the support 12 and, on the other hand, interact in a hooking manner with already present projecting parts of the carrying bracket 3 or the chassis 2, and means are present to retain the hook means in the hooking state.

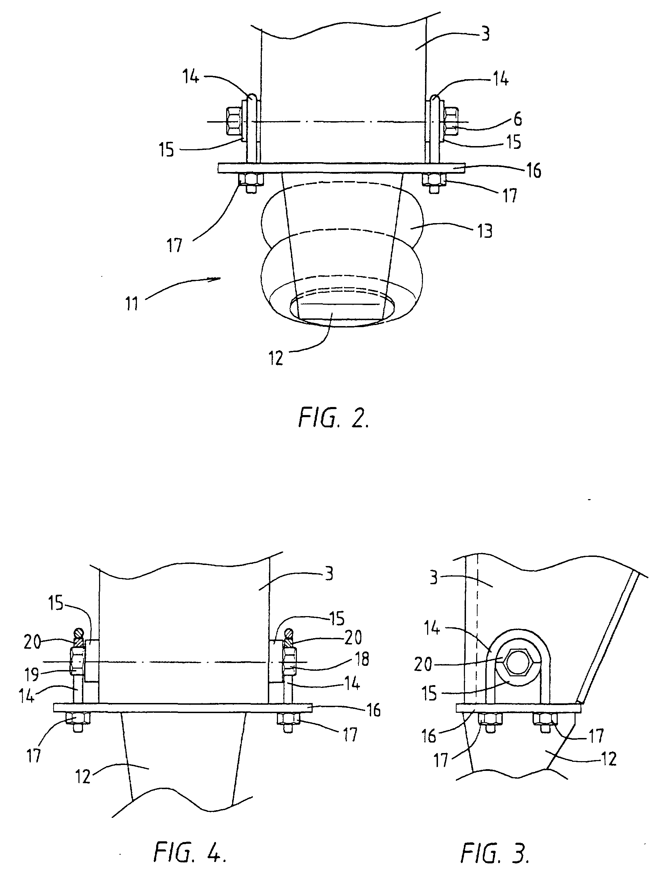

In the case of the embodiment shown in Figs. 1 and 2, the support 12 is fixed to the carrying bracket 3 by means of U-shaped clamping brackets 14, which are fitted on either side of carrying bracket 3 and hook around projecting parts 15 of the carrying bracket 3 projecting beyond the carrying bracket 3 at the position of the fixing bolt 6. The clamping brackets 14 project through holes in a flange part 16 of the support 12, the support 12 being pulled securely against the carrying bracket 3 by means of nuts 17 screwed on the clamping brackets 14. The projecting parts 15 are shown as being round, but in practice they can also be another shape.

In the case of the variant shown in Figs. 3 and 4, the clamping brackets 14 hook around the head 18 and the nut 19 of the fixing bolt 6, suitable connecting pieces 20 being fitted between the clamping brackets 14 and the head 18 and the nut 19 of the bolt 6. Sometimes the head 18 of the bolt 6 is round in shape. In that case a clamping bracket 14 can be hooked directly over the head 18 of the bolt.

Combinations of the variants shown in Figs. 1 and 2 and Figs. 3 and 4 are also possible.

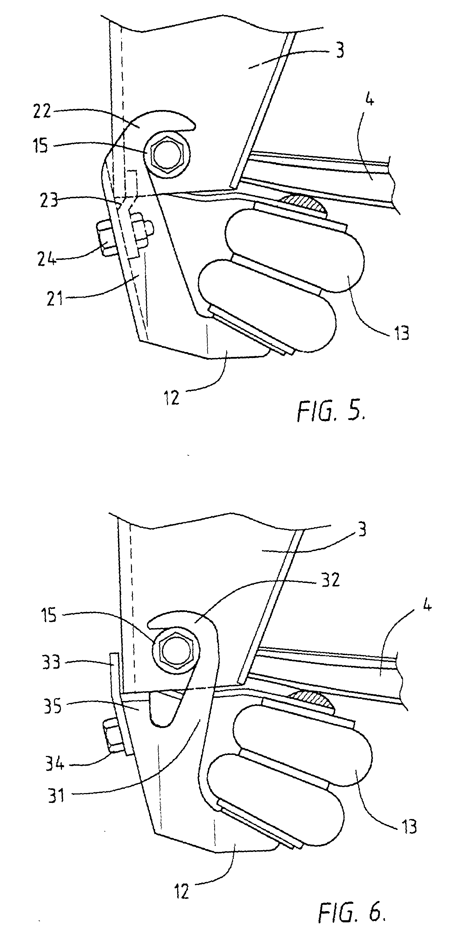

Fig. 5 shows an embodiment of the axle lifting device according to the invention in which the support 12 is provided with two suspension arms 21 fitted on either side of the carrying bracket 3 and immovably connected to the support 12, which suspension arms are provided at their free ends with hooks 22. The hooks 22 hook around the projecting parts 15 of the carrying bracket 3. The suspension arms 21 are held in place by a locking plate 23, which is fixed by means of a screw bolt 24 on the suspension arms 21 and grips behind a part of the carrying bracket 3.

In the embodiment shown in Fig. 6, the suspension arms 31 of the support 12 hook with hooks 32 from the other side around the projecting parts 15 of the carrying bracket 3. Here again, the suspension arms 31 are held in place by a locking plate 33, which is fixed by means of a screw bolt 34 to the suspension arms 31. Owing to the fact that a part 35 of the suspension arms 31 rests against the underside of the carrying bracket 3, the support 12 is prevented from rotating under the influence of forces acting thereon.

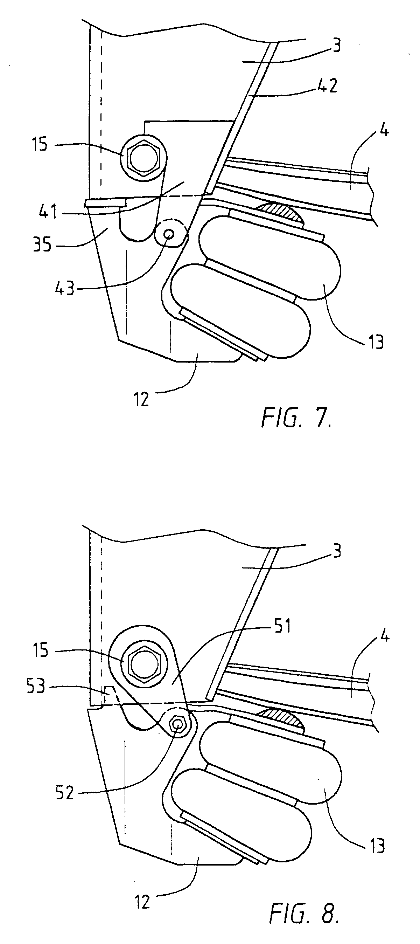

In the case of the embodiment of Fig. 7, the support 12 is detachably fixed to the carrying bracket 3 by means of two suspension plates 41, which are fitted on either side of the carrying bracket 3 and widen out at the top side and hook between the projecting parts 15 and flange parts 42 of the carrying bracket 3 which project on either side. The suspension plates 41 are detachably connected at the underside to the support 12, for example by means of a screw bolt connection 43. In this embodiment also, a part 35 of the support 12 rests against the underside of the carrying bracket 3, in order to counteract rotation of the support 12.

In the case of the embodiment of Fig. 8, the support 12 is detachably fixed to the carrying bracket 3 by means of two suspension plates 51, which are fitted on either side of the carrying bracket 3 and are provided with holes into which the projecting parts 15 of the carrying bracket 3 fit. The suspension plates 51 are detachably connected at the underside to the support 12, for example by means of a screw bolt connection 52. The support 12 is further provided with a lip 53 which hooks behind a part of the carrying bracket 3, with the result that the support 12 is held in place.

Figs. 7 and 8 show two loose suspension plates. It is also possible to use a loose suspension plate and a fixed suspension plate or suspension arm.

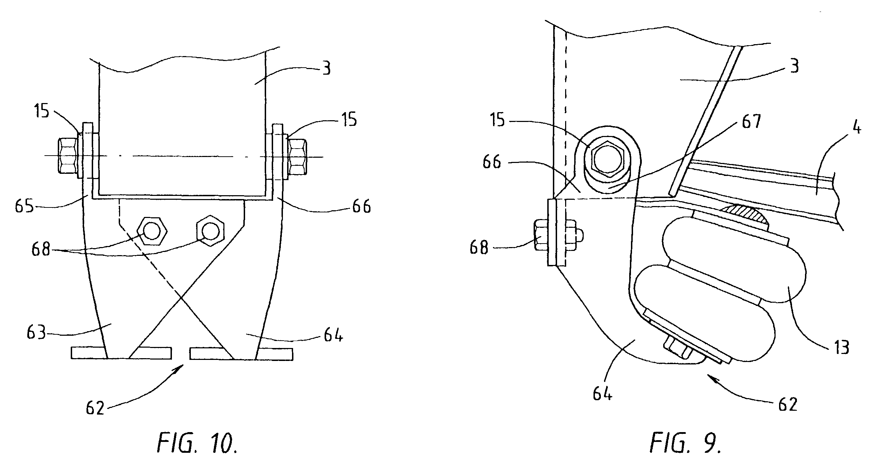

Figs. 9 and 10 show an embodiment of the axle lifting device according to the invention in which a support 62 for the gas bellows of the axle lifting device is composed of two parts 63 and 64, each provided with a suspension arm 65, 66 respectively which is provided with an aperture 67, in such a way that the suspension arms 65 and 66 can hook around the projecting parts 15 of the carrying bracket 3. The two support parts 63 and 64 are hooked from the side edge around the projecting parts 15 and detachably connected to each other by means of, for example, a screw bolt connection 68.

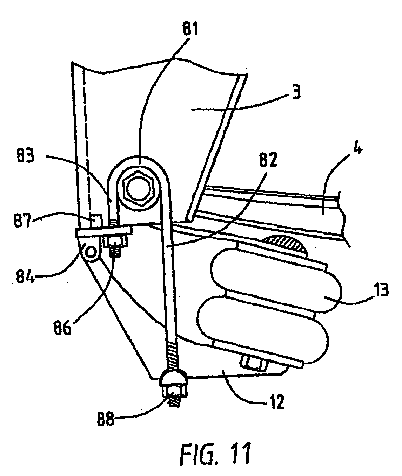

Fig. 11 shows a variant of the axle lifting device shown in Figs. 1 and 2. In the case of this variant the legs 82 and 83 of the clamping bracket 81 are of unequal length. The support 12 is hingedly connected to a fixing piece 84 which is firmly fixed to the carrying bracket 3 by the leg 83 with nut 86, a lip 87 taking care of the positioning relative to the carrying bracket 3. The leg 82 projects through the support 12. The height of the support 12 can be adjusted by means of a nut 88 which is screwed onto the threaded end of the leg 82.

The invention is not limited to the embodiments of the axle lifting device according to the invention described above. Other embodiments are also possible within the scope of the claims. Examples are embodiments in which the fixing parts of the support are provided with projections which fall into recesses or holes already present in the carrying bracket or the chassis.

As can be seen in the drawing, in particular in Fig. 1, a rubber cushion 95 is fitted at the top side of the gas bellows 13, by means of which cushion the gas bellows 13 rest against the bearing arm 4. In order to prevent shifting of the top side of the gas bellows 13 relative to the bearing arm 4, a strip-shaped positioning element (for example, a leaf spring) 96 is fitted, and is immovably connected by its one end to the top side of the gas bellows 13, and with its other end grips around the hinge between the bearing arm 4 and the carrying bracket 3, in such a way that the positioning element 96 cannot shift in the longitudinal direction of the bearing arm 4.

## Claims

1. Wheel axle suspension for a vehicle, comprising a bearing arm (4) for a wheel axle (1) which runs in the longitudinal direction of the vehicle from a carrying bracket (3) to be fixed to the chassis (2) of the vehicle to the wheel axle (1) of the vehicle, a gas spring system (8) operating between the wheel axle (1) and the chassis (2), and an axle lifting device (11) comprising a pneumatic expansion element (13) which is fitted between the bearing arm (4) and a support (12; 62) fitted below the bearing arm (4) and detachably connected to the carrying bracket (3) by means of hook means (14; 21; 31; 41; 51; 65; 66; 81) which, on the one hand, are connected to the support (12; 62) and, on the other hand, interact in a hooking manner with already present projecting parts (15; 18; 19) of the carrying bracket (3), retaining means being present for retaining the hook means in the hooking state,
**characterized in that** the hook means interact in a hooking manner with projecting parts (15) of the carrying bracket projecting beyond the carrying bracket at the position of a bolt (6) extending in the transverse direction through the carrying bracket (3), by means of which bolt the bearing arm (4) is fixed to the carrying bracket, or with projecting parts (18, 19) of the bolt (6) projecting beyond the carrying bracket.

2. Wheel axle suspension according to claim 1, wherein the hook means are formed by two U-shaped clamping brackets (14; 81) which are fitted on either side of the carrying bracket (3) and hook around the first projecting parts (15) or the projecting parts (18, 19) of the bolt (6), and which are connected by means of a screw connection (17; 88) to the support (12).

3. Wheel axle suspension according to claim 1, wherein the hook means are formed by two suspension arms (21; 31) fitted on either side of the carrying bracket (3) and connected to the support (12), which suspension arms are provided at their free ends with hooks (22; 32) which hook around the first projecting parts (15), and wherein the retaining means are formed by a locking plate (23; 33) fixed to the suspension arm (21; 31) and cooperating with the carrying bracket (3).

4. Wheel axle suspension according to claim 1,
wherein the hook means are formed by two suspension plates (51) fitted on either side of the carrying bracket (3), which suspension plates (51) are provided with holes into which the first projecting parts (15) fit, and are detachably connected to the support (12).

5. Wheel axle suspension according to claim 2,
**characterized in that** the support (62) is composed of two parts (63, 64) detachably connected to each other and each provided with a suspension arm (65, 66) provided with an aperture (67) such that the suspension arms can hook around the first projecting parts (15).

6. Wheel axle suspension according to claim 1,
wherein the hook means are formed by two suspension plates (41) fitted on either side of the carrying bracket (3), which suspension plates (41), on the one side, hook around the first projecting parts (15) and, on the other side, rest against projecting flange parts (42) of the carrying bracket (3), and are connected to the support (12).

7. Wheel axle suspension according to one or more of claims 1-6, wherein a strip-shaped positioning element (96) is present, which positioning element is connected by one end to the top side of the pneumatic expansion element (13) and grips with its other end around the connecting point of the bearing arm (4) to the carrying bracket (3).

## Patentansprüche

1. Radachsenaufhängung für ein Fahrzeug, die einen Tragarm (4) für eine Radachse (1), der in der Längsrichtung des Fahrzeugs von einem Haltewinkel (3), der am Chassis (2) des Fahrzeugs zu befestigen ist, zu der Radachse (1) des Fahrzeugs verläuft, ein Gasfedersystem (8), das zwischen der Radachse (1) und dem Chassis (2) wirkt, und eine Achsen-Anhebevorrichtung (1) umfasst, die ein pneumatisches Dehnungselement (13) umfasst, das zwischen den Tragarm (4) und einen Träger (12; 62) eingesetzt ist, der unter den Tragarm (4) eingesetzt und mit dem Haltewinkel (3) mittels Hakeneinrichtungen (14; 21; 31; 41; 51; 65; 66; 81) lösbar verbunden ist, die einerseits mit dem Träger (12; 62) verbunden sind und andererseits hakenartig mit bereits vorhandenen vorstehenden Teilen (15; 18; 19) des Haltewinkels (3) zusammenwirken, wobei Halteeinrichtungen vorhanden sind, die die Hakeneinrichtungen in dem eingehakten Zustand halten, **dadurch gekennzeichnet, dass** die Hakeneinrichtungen hakenartig mit vorstehenden Teilen (15) des Haltewinkels, die über den Haltewinkel an der Position einer Schraube (6) vorstehen, die sich in der Querrichtung durch den Haltewinkel (3) hindurch erstreckt, zusammenwirken, wobei mit der Schraube der Tragarm (4) an dem Haltewinkel befestigt ist, oder mit vorstehenden Teilen (18, 19) der Schraube (6) zusammenwirken, die über den Haltewinkel hinaus vorstehen.

2. Radachsenaufhängung nach Anspruch 1, wobei die Hakeneinrichtungen durch zwei U-förmige Klemmklammern (14; 81) gebildet werden, die auf beiden Seiten des Haltewinkels (3) angebracht sind und um die ersten vorstehenden Teile (15) oder die vorstehenden Teile (18, 19) der Schraube (6) herum gehakt sind und die durch eine Schraubenverbindung (17; 18) mit dem Träger (12) verbunden sind.

3. Radachsenaufhängung nach Anspruch 1, wobei die Hakeneinrichtungen durch zwei Aufhängearme (21; 31) gebildet werden, die auf beiden Seiten des Haltewinkels (3) angebracht und mit dem Träger (12) verbunden sind, wobei die Aufhängungsarme an ihren freien Enden mit Haken (22; 32) versehen sind, die um die ersten vorstehenden Teile (15) herum gehakt sind, und wobei die Halteeinrichtungen durch eine Arretierplatte (23; 33) gebildet werden, die an dem Aufhängungsarm (21; 31) befestigt ist und mit dem Haltewinkel (3) zusammenwirkt.

4. Radachsenaufhängung nach Anspruch 1, wobei die Hakeneinrichtungen durch zwei Aufhängungsplatten (51) gebildet werden, die auf beiden Seiten des Haltewinkels (3) angebracht sind, wobei die Aufhängungsplatten (51) mit Löchern versehen sind, in die die ersten vorstehenden Teile (15) passen, und lösbar mit dem Halter (12) verbunden sind.

5. Radachsenaufhängung nach Anspruch 1, **dadurch gekennzeichnet, dass** der Träger (62) aus zwei Teilen (63, 64) besteht, die lösbar miteinander verbunden und jeweils mit einem Aufhängungsarm (65, 66) versehen sind, der mit einer Öffnung (67) versehen ist, so dass die Aufhängungsarme um die ersten vorstehenden Teile (15) herum gehakt werden können.

6. Radachsenaufhängung nach Anspruch 1, wobei die Hakeneinrichtungen durch zwei Aufhängungsplatten (41) gebildet werden, die auf beiden Seiten des Haltewinkels (3) angebracht sind, wobei die Aufhängungsplatten (41) an der einen Seite um die ersten vorstehenden Teile (15) herum gehakt sind und auf der anderen Seite an den vorstehenden Flanschteilen (42) des Haltewinkels (3) anliegen und mit dem Träger (12) verbunden sind.

7. Radachsenaufhängung nach einem oder mehreren der Ansprüche 1-6, wobei ein streifenförmiges Positionierelement (96) vorhanden ist und das Positionierelement an einem Ende mit der Oberseite des pneumatischen Dehnungselementes (13) verbunden ist und an seinem anderen Ende um den Verbindungspunkt des Tragarms (4) mit dem Haltewinkel (3) herum greift.

## Revendications

1. Suspension d'essieu d'une roue pour un véhicule, comprenant un bras de support (4) pour un essieu (1) qui fonctionne dans le sens longitudinal du véhicule à partir d'une patte d'attache portante (3) devant être fixée au châssis (2) du véhicule jusqu'à la suspension d'essieu (1) du véhicule, un système de ressort à gaz (8) fonctionnant entre la suspension d'essieu (1) et le châssis (2), et un dispositif de levage d'essieu (11) comprenant un élément d'expansion pneumatique (13) qui est ajusté entre le bras de support (4) et un support (12 ; 62) ajusté au-dessous du bras de support (4) et raccordé de façon détachable à la patte d'attache portante (3) par des moyens formant crochets (14 ; 21 ; 31 ; 41 ; 51 ; 65 ; 66 ; 81) qui, d'une part, sont raccordés au support (12, 62) et, d'autre part, interagissent par accrochage avec des parties en saillie déjà présentes (15 ; 18 ; 19) de la patte d'attache portante (3), des moyens de retenue étant présents pour retenir les moyens formant crochets dans l'état d'accrochage,
**caractérisée en ce que** les moyens formant crochets interagissent par accrochage avec des parties faisant saillie (15) de la patte d'attache portante faisant saillie au-delà de la patte d'attache portante à la position d'un boulon (6) qui s'étend dans le sens transversal à travers la patte d'attache portante (3), boulon au moyen duquel le bras de support (4) est fixé à la patte d'attache portante, ou avec des parties faisant saillie (18, 19) du boulon (6) dépassant au-delà de la patte d'attache portante.

2. Suspension d'essieu d'une roue selon la revendication 1, dans laquelle les moyens formant crochets sont formés par deux pattes d'attache de blocage en forme de U (14 ; 81) qui sont ajustées sur un côté ou l'autre de la patte d'attache portante (3) et s'accrochent autour des premières parties faisant saillie (15) ou des parties faisant saillie (18, 19) du boulon (6), et qui sont raccordés au moyen d'un raccord à vis (17 ; 88) au support (12).

3. Suspension d'essieu d'une roue selon la revendication 1, dans laquelle les moyens formant crochets sont formés par deux bras de suspension (21 ; 31) ajustés sur chaque côté de la patte d'attache portante (3) et raccordés au support (12), lesquels bras de suspension sont dotés à leurs extrémités libres de crochets (22 ; 32) qui s'accrochent autour des premières parties faisant saillie (15), et dans laquelle les moyens de retenue sont formés par une plaque de blocage (23 ; 33) fixée au bras de suspension (21 ; 31) et coopérant avec la patte d'attache portante (3).

4. Suspension d'essieu d'une roue selon la revendication 1, dans laquelle les moyens formant crochets sont formés par deux plaques de suspension (51) ajustées sur chaque côté de la patte d'attache portante (3), lesquelles plaques de suspension (51) sont dotées de trous dans lesquels s'ajustent les premières parties faisant saillie (15) et sont raccordées de façon détachable au support (12).

5. Suspension d'essieu d'une roue selon la revendication 1, **caractérisée en ce que** le support (62) est composé de deux parties (63, 64) raccordées de façon détachable l'une à l'autre et dotées chacune d'un bras de suspension (65, 66) doté d'une ouverture (67) de telle sorte que les bras de suspension peuvent s'accrocher autour des premières parties faisant saillie (15).

6. Suspension d'essieu d'une roue selon la revendication 1, dans laquelle les moyens formant crochets sont formés par deux plaques de suspension (41) ajustées sur chaque côté de la patte d'attache portante (3), lesquelles plaques de suspension (41) d'une part, s'accrochent autour des premières parties faisant saillie (15) et, d'autre part, reposent contre des parties formant brides faisant saillie (42) de la patte d'attache portante (3) et sont raccordées au support (12).

7. Suspension d'essieu d'une roue selon l'une ou plusieurs des revendications 1 à 6, dans laquelle un élément de positionnement (96) en forme de bande est présent, lequel élément de positionnement est raccordé par une extrémité au côté supérieur de l'élément d'expansion pneumatique (13) et adhère avec son autre extrémité autour du point de raccordement du bras de support (4) à la patte d'attache portante (3).
